# EUROPÄISCHE PATENTSCHRIFT

(11) **EP 3 970 576 B1**
(45) Veröffentlichungstag und Bekanntmachung des Hinweises auf die Patenterteilung: **02.11.2022**
(21) Anmeldenummer: 21196237.8
(22) Anmeldetag: 13.09.2021
(51) Int. Cl.: A47J 31/40, A47J 31/44, B25J 9/02, B25J 11/00, G07F 9/10, G07F 11/16, G07F 13/06, G07F 13/10

(54) **VORRICHTUNG ZUR AUTOMATISIERTEN BEREITSTELLUNG VON FLÜSSIGKEITEN**
DEVICE FOR THE AUTOMATED SUPPLY OF LIQUIDS
DISPOSITIF POUR L'APPROVISIONNEMENT AUTOMATISÉ EN LIQUIDES

(30) Priorität: 14.09.2020 DE 102020123909
(43) Veröffentlichungstag der Anmeldung: 23.03.2022
(73) Patentinhaber: SAR Elektronic GmbH, 84130 Dingolfing (DE)
(72) Erfinder: RAINER, Johann, 84164 Moosthenning (DE)
(74) Vertreter: Lichtnecker, Markus Christoph

(56) Entgegenhaltungen:
- WO-A1-2019/156622
- CN-A- 109 816 871
- CN-A- 109 965 697
- DE-A1-102018 132 062
- JP-A- H06 168 377

## Beschreibung

Die Erfindung betrifft eine Vorrichtung zur automatisierten Bereitstellung von Flüssigkeiten, vorzugsweise Kaffee, Tee und/oder Kaltgetränken, aufweisend einen Gefäßspeicher zum Speichern von Gefäßen und eine Zuführvorrichtung zum Zuführen wenigstens eines Gefäßes zu einem Flüssigkeitsauslass einer Zubereitungsvorrichtung.

Derartige Vorrichtungen sind grundsätzlich bekannt. Beispielsweise gibt es Kaffeeautomaten, bei denen automatisch ein Pappbecher bereitgestellt und mit Kaffee aus einem Flüssigkeitsauslass befüllt wird.

Nachteilig daran ist beispielsweise, dass keine wiederverwertbaren Keramiktassen eingesetzt werden können. Derartige Kaffeeautomaten können daher beispielsweise nicht als Unterstützung des Personals in Kaffeehäusern eingesetzt werden.

Bei Keramiktassen oder Glasgläsern, welche beispielsweise per Hand einem Flüssigkeitsauslass zugeführt werden, besteht der Nachteil, dass diese meist nicht vorgewärmt sind und sich der Kaffee folglich bereits beim Befüllen stark abkühlt.

WO 2019/156622 A1 offenbart eine Vorrichtung gemäß dem Oberbegriff des Anspruchs 1.

Es ist eine Aufgabe der Erfindung, eine Vorrichtung sowie ein Verfahren zur automatisierten Bereitstellung von Flüssigkeiten zu schaffen, bei der/dem die Gefäße temperiert befüllt werden.

Die Lösung dieser Aufgabe erfolgt durch die Gegenstände/Verfahren der unabhängigen Ansprüche.

Erfindungsgemäß ist die Vorrichtung zur automatisierten Bereitstellung von Flüssigkeiten ausgebildet bzw. kann hierzu verwendet werden.

Der Begriff Flüssigkeit ist breit zu verstehen und umfasst beispielsweise neben Getränken wie z.B. Kaffee, Tee oder Kaltgetränken auch flüssige oder zähflüssige Speisen. Die Speisen können z.B. einen hohen Flüssigkeitsanteil aufweisen. Beispielsweise kann es sich bei den Speisen um Eis, Suppen, Eintöpfe oder einfache Gerichte wie z.B. Chili con Carne handeln.

Bei der Flüssigkeit kann es sich z.B. um sehr kalte, beispielsweise zumindest teilweise gefrorene, Getränke und/oder Speisen handeln, z.B. Wassereis, Slusheis, Speiseeis, Eiskaffee, Eistee, Longdrinks oder Cocktails.

Ferner kann es sich beispielsweise um kalte Getränke und/oder Speisen handeln, z.B. Kaltgetränke wie stilles Wasser, Mineralwasser, Saft, Smoothie, Cola, Limonade, Bier oder Mischgetränke. Auch sind z.B. kalte Suppen, beispielsweise Gazpacho, denkbar.

Schließlich kann es sich bei der Flüssigkeit um warme oder heiße Getränke und/oder Speisen handeln, beispielsweise um Kaffee, z.B. Filterkaffee, Milchkaffee, Espresso, Espresso Macchiato, Latte Macchiato oder Cappuccino, um Tee, Matcha, Mate, heiße Schokolade, Kakao, Milch, um Milchersatz, z.B. Hafermilch, Sojamilch, Mandelmilch, um Müsli, Glühwein, Suppen und/oder Eintöpfe.

Erfindungsgemäß umfasst die Vorrichtung einen Gefäßspeicher zum Speichern von Gefäßen.

Bei den Gefäßen kann es sich beispielsweise um Tassen, Gläser, Becher, Kannen, Teller, Schüsseln und/oder Näpfe handeln.

Die Gefäße können ein Metallmaterial, Kunststoffmaterial, Keramikmaterial, Steinmaterial und/oder ein Glasmaterial umfassen oder daraus bestehen.

Die Gefäße im Gefäßspeicher können gleich groß oder unterschiedlich groß sein.

Der Gefäßspeicher weist eine Temperierungsvorrichtung zum Temperieren der Gefäße auf. Beispielsweise kann die Temperierungsvorrichtung einen Wärmetauscher, eine Heizung und/oder eine Kühlung umfassen oder daraus bestehen.

Die Temperierungsvorrichtung ist vorzugsweise dazu ausgebildet, den Innenraum des Gefäßspeichers kalt und/oder warm zu halten. Die Gefäße können über die Temperierungsvorrichtung beispielsweise unmittelbar temperiert werden. So können die Gefäße z.B. auf Heiz- oder Kühlstäben angeordnet sein. Alternativ oder zusätzlich kann auch der gesamte Innenraum des Gefäßspeichers temperiert werden. Beispielsweise können an den Wänden des Gefäßspeichers Heiz- oder Kühlplatten vorgesehen sein.

Der Gefäßspeicher weist vorzugsweise ein Gehäuse auf. Das Gehäuse kann beispielsweise vollständig umschlossen sein. Im geschlossenen Zustand findet vorzugsweise kein bzw. lediglich ein geringer Wärmeaustausch mit dem Inneren des Gefäßspeichers und der Umgebung statt.

Beispielsweise kann der Gefäßspeicher mehrere Schienen und/oder Regale für Tabletts aufweisen. Tabletts, auf denen mehrere Gefäße platziert sind, können z.B. auf den Schienen des Gefäßspeichers aufgenommen werden.

Die Gefäße sind aus Hygienegründen vorzugsweise mit der Öffnung nach unten auf den Tabletts angeordnet.

Zum Befüllen des Gefäßspeichers kann dieser wenigstens eine Tür aufweisen, wobei auch mehrere Türen denkbar sind. Die Entnahme der leeren Tabletts kann ebenfalls über die Tür des Gefäßspeichers erfolgen.

Die Vorrichtung weist eine Zuführvorrichtung zum Zuführen wenigstens eines Gefäßes zu einem Flüssigkeitsauslass einer Zubereitungsvorrichtung auf.

Bei der Zubereitungsvorrichtung kann es sich z.B. um eine Kaffeemaschine, einen Kaffeevollautomaten, einen Heißwasserspeicher, einen Eiswasserspeicher, eine Eismaschine, einen Getränkeautomaten und/oder einen Speicher für Speisen handeln.

Die Zubereitungsvorrichtung kann vorzugsweise einen Flüssigkeitsspeicher, beispielsweise einen Tank oder einen Kanister, aufweisen. Alternativ oder zusätzlich kann die Zubereitungsvorrichtung mit einer Wasserleitung verbunden sein. Beispielsweise kann die Zubereitungsvorrichtung Wasser mit Kohlensäure und/oder einem Sirup versetzen.

Über die Zuführvorrichtung kann z.B. genau ein Gefäß einem Flüssigkeitsauslass zugeführt werden. Alternativ können mehrere Gefäße gleichzeitig einem Flüssigkeitsauslass oder unterschiedlichen Flüssigkeitsauslässen zugeführt werden.

Die Zuführvorrichtung umfasst eine Hebevorrichtung, die derart ausgebildet ist, dass in einer Aufnahmeposition eine Öffnung des Gefäßspeichers freigegeben ist.

Vorzugsweise ist die Öffnung des Gefäßspeichers seitlich am Gefäßspeicher vorgesehen. Die Öffnung kann beispielsweise rechteckförmig oder kreisförmig ausgebildet sein.

In der Aufnahmeposition ist der Gefäßspeicher zumindest abschnittsweise geöffnet. Ein Gefäß aus dem Gefäßspeicher kann von der Hebevorrichtung aufgenommen werden.

Die Hebevorrichtung ist derart ausgebildet, dass in einer gegenüber der Aufnahmeposition erhöhten Befüllposition die Öffnung des Gefäßspeichers geschlossen ist. In der Befüllposition kann das Gefäß über den Flüssigkeitsauslass befüllt werden.

Die Hebevorrichtung kann zwischen der Aufnahmeposition und der Befüllposition verstellt werden. Vorzugsweise kann die Zuführvorrichtung einen, z.B. elektrischen, mechanischen, hydraulischen und/oder pneumatischen, Antrieb für die Hebevorrichtung umfassen. Ferner kann die Zuführvorrichtung eine Steuerungsvorrichtung aufweisen, um die Bewegung der Hebevorrichtung zu steuern.

Beispielsweise wird die Hebevorrichtung aus der Aufnahmeposition, vorzugsweise nach oben in Richtung des Flüssigkeitsauslasses gehoben, sodass das Gefäß befüllt werden kann.

Dabei wird die Öffnung des Gefäßspeichers automatisch geschlossen, sodass lediglich kurzzeitig Wärme oder Kälte aus dem Gefäßspeicher entweichen kann. Auf diese Weise kann Energie eingespart werden. Die räumliche Trennung ist auch unter hygienischen Gesichtspunkten vorteilhaft.

Die Hebevorrichtung erfüllt eine Doppelfunktion, da diese einerseits die Gefäße hebt und andererseits den Gefäßspeicher verschließt und quasi als eine Art Schleuse fungiert. Es war überraschend, dass kein separates Bauteil und/oder kein separater Antrieb zum Öffnen und/oder Schließen des Gefäßspeichers notwendig ist.

Wenn das Gefäß mit einer Flüssigkeit, z.B. Kaffee, gefüllt ist, kann das Gefäß von der Hebevorrichtung entnommen werden. Dies kann manuell oder mittels eines Roboters erfolgen.

Beispielsweise kann wenigstens eine weitere Zutat, z.B. Milch, Sahne, Crema, eine Sauce und/oder ein Topping, hinzugefügt werden. Dies kann manuell oder mittels eines Roboters erfolgen. Beispielsweise kann der Roboter das gefüllte Gefäß von der Hebevorrichtung entnehmen und wenigstens eine weitere Zutat hinzufügen.

Die fertige Flüssigkeitszubereitung kann nun beispielsweise von einem Endkunden entnommen werden. Alternativ kann die Flüssigkeitszubereitung von einem Servicepersonal aufgenommen und zum Endkunden gebracht werden. In diesem Fall unterstützt die Vorrichtung das Personal in Kaffeehäusern, Restaurants, Kantinen, Bars, Diskotheken und/oder Clubs. Die Flüssigkeitszubereitungen können schnell erstellt und ausgegeben werden.

Durch die erfindungsgemäße Vorrichtung können Kosten eingespart werden. Zudem können wiederverwertbare Gefäße eingesetzt werden, was unter Umweltgesichtspunkten vorteilhaft ist.

Dadurch, dass das Gefäß bereits im Gefäßspeicher temperiert wird, bleibt die Temperatur der Flüssigkeit zumindest im Wesentlichen erhalten und wird durch das Gefäß nicht negativ beeinflusst.

Weiterbildungen der Erfindung sind auch den abhängigen Ansprüchen, der Beschreibung sowie den beigefügten Zeichnungen zu entnehmen.

Gemäß einer Ausführungsform ist die Hebevorrichtung derart ausgebildet, dass die Öffnung des Gefäßspeichers beim Heben der Hebevorrichtung aus der Aufnahmeposition in die Befüllposition automatisch geschlossen wird.

Die Hebevorrichtung ist gewissermaßen multifunktional. Ein zusätzlicher Mechanismus bzw. eine zusätzliche Vorrichtung zum Öffnen des Gefäßspeichers ist vorzugsweise nicht vorgesehen, wodurch die Kosten gering gehalten werden können.

Die Öffnung ist folglich meist geschlossen und wird nur geöffnet, um Gefäße aus dem Gefäßspeicher zu entnehmen. So bleibt die Temperatur im Inneren des Gefäßspeichers zumindest im Wesentlichen erhalten.

Erfindungsgemäß weist die Hebevorrichtung eine seitliche Wandung als Verschluss für die Öffnung des Gefäßspeichers auf.

Die Wandung ist vorzugsweise größer als die Öffnung des Gefäßspeichers. Beispielsweise kann die Wandung plattenförmig, z.B. rechteckförmig, ausgebildet sein.

Vorzugsweise erstreckt sich die Wandung unterhalb einer Aufnahmefläche für die Gefäße. Die Wandung kann beispielsweise rechtwinklig zur Aufnahmefläche der Hebevorrichtung orientiert sein.

Gemäß einer weiteren Ausführungsform ist der Abstand der Hebevorrichtung, vorzugsweise der Aufnahmefläche, zum Flüssigkeitsauslass in der Befüllposition abhängig von der Größe des Gefäßes einstellbar.

Vorzugsweise wird der Abstand automatisch, z.B. gefäßspezifisch, eingestellt. Beispielsweise kann wenigstens ein Sensor vorgesehen sein, um die Größe des Gefäßes zu bestimmen. Alternativ können auch im Gefäßspeicher unterschiedliche Bereiche vorgesehen sein, in denen sich jeweils unterschiedlich große Gefäße befinden. Ein Sensor kann hierbei entfallen, da der Abstand abhängig vom Bereich, aus dem das Gefäß entnommen wird, eingestellt werden kann.

Es kann beispielsweise eine Steuerungsvorrichtung vorgesehen sein. Mittels der Steuerungsvorrichtung kann die Hebevorrichtung z.B. abhängig von der durch den Sensor bestimmten Größe des Gefäßes und/oder abhängig vom Bereich, aus dem das Gefäß entnommen wurde, gesteuert werden.

Hierbei kann vorzugsweise die Hebebewegung gesteuert werden. Größere Gefäße werden z.B. weniger weit nach oben gehoben als kleinere Gefäße. Der Abstand vom oberen Gefäßrand zum Flüssigkeitsauslass ist vorzugsweise gleich, auch wenn die Gefäße unterschiedlich groß sind.

In dieser Ausführungsform weist also die Vorrichtung eine Steuerungsvorrichtung auf, die dazu ausgebildet ist, den Abstand der Hebevorrichtung, vorzugsweise einer Aufnahmefläche der Hebevorrichtung, zum Flüssigkeitsauslass abhängig von der Größe des Gefäßes einzustellen.

Nach einer weiteren Ausführungsform weist die Hebevorrichtung eine Abtropfvorrichtung auf.

Die Abtropfvorrichtung kann beispielsweise die Oberseite der Hebevorrichtung bilden. Die Abtropfvorrichtung kann als eine Einheit mit der restlichen Hebevorrichtung ausgebildet sein. Alternativ kann es sich um ein separates Bauteil handeln.

Vorzugsweise bildet die Abtropfvorrichtung eine Aufnahmefläche für wenigstens ein Gefäß.

Bei der Abtropfvorrichtung kann es sich z.B. um ein Abtropfgitter, einen Abtropfrost, eine Abtropfschale und/oder eine Abtropfmatte handeln.

Überlaufende Flüssigkeiten bzw. Spülflüssigkeiten können von der Abtropfvorrichtung aufgenommen werden.

Gemäß einer weiteren Ausführungsform weist die Hebevorrichtung eine Ablaufvorrichtung auf.

Die Ablaufvorrichtung ist vorzugsweise unterhalb der Abtropfvorrichtung vorgesehen.

Überlaufende Flüssigkeiten bzw. Spülflüssigkeiten können von der Abtropfvorrichtung aufgenommen und durch die Ablaufvorrichtung abgeleitet werden. Die Ablaufvorrichtung kann beispielsweise einen Trichter zum Zusammenführen der Flüssigkeiten aufweisen. Vorzugsweise umfasst die Ablaufvorrichtung einen Schlauch, um die Flüssigkeiten abzuführen.

Nach einer weiteren Ausführungsform weist der Gefäßspeicher eine Transportvorrichtung auf, die dazu ausgebildet ist, wenigstens ein Gefäß zur in der Aufnahmeposition befindlichen Hebevorrichtung zu transportieren.

Beispielsweise ist die Transportvorrichtung dazu ausgebildet, ein Gefäß aus einem Lagerplatz, z.B. einem Tablett, zu entnehmen.

Die Transportvorrichtung kann z.B. einen Greifer aufweisen.

Vorzugsweise kann ein Schienensystem vorgesehen sein. Der Greifer kann beispielsweise auf dem Schienensystem bewegt werden, vorzugsweise zwischen einem Lagerplatz für die Gefäße und der Hebevorrichtung.

Die Transportvorrichtung kann ein Gefäß vorzugsweise automatisiert vom Lagerplatz zur Hebevorrichtung transportieren. Beispielsweise kann eine Sensorik und/oder eine Steuerung vorgesehen sein. Bei der Steuerung kann es sich vorzugsweise um eine zentrale Steuerungsvorrichtung handeln, welche auch die Bewegung der Hebevorrichtung steuert. Alternativ sind separate Steuerungen denkbar.

Vorzugsweise ist die Transportvorrichtung dazu ausgebildet, das Gefäß an eine vorgebbare Position auf der Hebevorrichtung zu transportieren. So kann das Gefäß z.B. an einer gewünschten Position auf der Auflagefläche abgestellt werden. Auch mehrere Gefäße können nebeneinander auf der Auflagefläche abgestellt werden, um beispielsweise gleichzeitig befüllt werden zu können.

Gemäß einer weiteren Ausführungsform ist die Transportvorrichtung dazu ausgebildet, das Gefäß um 180° zu drehen.

Am Lagerplatz, z.B. auf einem Tablett, können die Gefäße beispielsweise mit der Öffnung nach unten angeordnet sein, was unter hygienischen Gesichtspunkten vorteilhaft ist.

Die Transportvorrichtung kann das entnommene Gefäß um 180° drehen, damit die Öffnung nach oben zeigt und das Gefäß befüllt werden kann. Beispielsweise kann der Greifer der Transportvorrichtung ein Gelenk aufweisen.

Das Umstülpen der Gefäße erfolgt vorzugsweise automatisiert.

Die Erfindung betrifft auch ein Verfahren zur automatisierten Bereitstellung von Flüssigkeiten, vorzugsweise Kaffee, Tee und/oder Kaltgetränken, mit einer erfindungsgemäßen Vorrichtung.

Die Gefäße werden im Gefäßspeicher temperiert.

Die Hebevorrichtung wird in die Aufnahmeposition verstellt, wobei die Öffnung des Gefäßspeichers freigegeben wird.

Das Gefäß wird auf der Hebevorrichtung aufgenommen.

Die Hebevorrichtung wird in eine gegenüber der Aufnahmeposition erhöhte Befüllposition gehoben, wobei die Öffnung des Gefäßspeichers durch die seitliche Wandung der Hebevorrichtung geschlossen wird Ein Temperaturaustausch zwischen dem Inneren des Gefäßspeichers und der Umgebung wird auf diese Weise minimiert.

Gemäß einer Ausführungsform wird der Abstand der Hebevorrichtung zum Flüssigkeitsauslass in der Befüllposition abhängig von der Größe des Gefäßes eingestellt, vorzugsweise automatisch.

Der Hub der Hebevorrichtung kann daher abhängig von der Größe des Gefäßes variieren.

Vorzugsweise stellt die Transportvorrichtung das Gefäß an einer vorgegebenen Position auf der Hebevorrichtung ab. Das Gefäß ist demnach bereits richtig positioniert, ehe dieses mit der Hebevorrichtung nach oben gehoben wird.

Alle hier beschriebenen Ausführungsformen und Bauteile der Vorrichtung sind vorzugsweise dazu ausgebildet, z.B. mittels einer Steuerungsvorrichtung, nach dem hier beschriebenen Verfahren betrieben zu werden,

Die Erfindung wird im Folgenden beispielhaft unter Bezugnahme auf die Zeichnungen beschrieben. Es zeigen:
- Fig. 1: eine Perspektivansicht einer Ausführungsform einer erfindungsgemäßen Vorrichtung,
- Fig. 2: eine weitere Perspektivansicht der Vorrichtung gemäß Fig. 1,
- Fig. 3 bis 7: perspektivische Detailansichten der Vorrichtung gemäß Fig. 1,
- Fig. 8: eine Schnittansicht der Vorrichtung gemäß Fig. 4, und
- Fig. 9: eine Perspektivansicht einer weiteren Ausführungsform einer erfindungsgemäßen Vorrichtung.

Zunächst ist zu bemerken, dass die dargestellten Ausführungsformen rein beispielhafter Natur sind. Variationen dieser Ausführungsformen sind möglich, solange sie nicht über den Inhalt der beiliegenden Ansprüche hinausgehen.

Vorzugsweise kann die Form und/oder Anzahl an Hebevorrichtungen, Transportvorrichtungen und Gefäßen variieren. Auch der Gefäßspeicher kann eine andere Form aufweisen. Die Seitenwandungen des Gefäßspeichers wurden zur besseren Sichtbarkeit teils weggelassen bzw. transparent dargestellt.

Enthält eine Figur ein Bezugszeichen, welches im unmittelbar zugehörigen Beschreibungstext nicht erläutert wird, so wird auf die entsprechenden vorhergehenden bzw. nachfolgenden Ausführungen in der Figurenbeschreibung Bezug genommen. So werden für gleiche bzw. vergleichbare Bauteile in den Figuren dieselben Bezugszeichen verwendet und diese nicht nochmals erläutert.

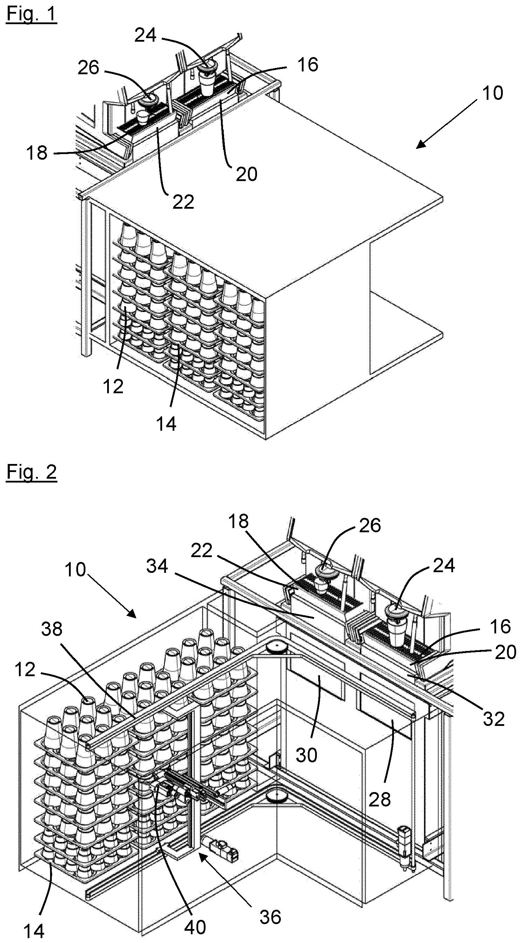

Fig. 1 zeigt eine Vorrichtung zur automatisierten Bereitstellung von Flüssigkeiten.

Die Vorrichtung umfasst einen Gefäßspeicher 10 zum Speichern von Gefäßen 12, wobei der Gefäßspeicher 10 eine nicht dargestellte Temperierungsvorrichtung zum Temperieren der Gefäße 12 aufweist.

Damit kann der Gefäßspeicher 10 innen beheizt oder gekühlt werden. Dadurch werden die Gefäße 12 auf die gewünschte Temperatur vorgewärmt.

Zum Befüllen des Gefäßspeichers 10 kann dieser wenigstens eine - hier nicht dargestellte - Tür aufweisen. Über die Tür kann ein Zugang in das Innere des Gefäßspeichers 10 bereitgestellt werden. Der Gefäßspeicher 10, der z.B. ein Regal und/oder Schienen aufweisen kann, kann durch den Zugang mit Tabletts 14, die mit Gefäßen 12 bestückt sind, gefüllt werden.

Die gezeigte Vorrichtung umfasst zwei Zuführvorrichtungen 16, 18, wobei auch mehr als zwei Zuführvorrichtungen oder lediglich eine Zuführvorrichtung denkbar sind.

Jede Zuführvorrichtung 16, 18 weist eine Hebevorrichtung 20, 22 zum Zuführen wenigstens eines Gefäßes 12 zu einem Flüssigkeitsauslass 24, 26 einer - hier nicht dargestellten - Zubereitungsvorrichtung auf.

Die Hebevorrichtungen 20, 22 befinden sich in einer Befüllposition, in der die Gefäße 12 über die Flüssigkeitsauslässe 24, 26 befüllt werden.

Wie in Fig. 2 zu sehen ist, weist der Gefäßspeicher 10 Öffnungen 28, 30 auf, die in der Befüllposition geschlossen sind.

Dazu weisen die Hebevorrichtungen 20, 22 jeweils eine seitliche Wandung 32, 34 auf.

Der Gefäßspeicher 10 weist eine Transportvorrichtung 36 auf. Die Transportvorrichtung kann mehrere Schienen 38 sowie einen Greifer 40 aufweisen. Der Greifer 40 kann entlang der Schienen 38 verfahren werden.

Der Greifer 40 kann ein Gefäß 12 entnehmen und es entlang der Schienen 38 zu einer der Öffnungen 28, 30 transportieren.

Der gezeigte Bahnverlauf der Schienen 38 ist lediglich beispielhaft und kann beispielsweise ebenso gerade oder anderweitig, z.B. in U-Form, verlaufen. Ferner kann anstelle der Doppelführung (oben und unten) ebenso eine einfache Führung für die horizontale Bewegung ausreichen.

Schließlich können auch mehrere und/oder unterschiedliche Gefäßregale angefahren werden.

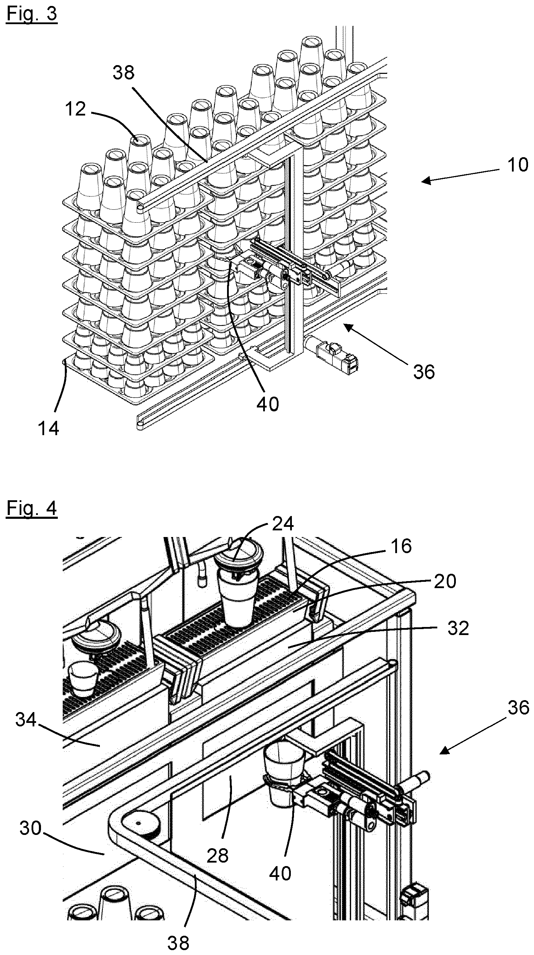

Fig. 3 zeigt eine Detailansicht des Gefäßspeichers 10. Die Tabletts 14 können vorzugsweise jeweils Gefäße 12 unterschiedlicher Größe aufweisen.

Die Tabletts 14 können z.B. von einem - hier nicht dargestellten - Gestell gehalten werden. Die Gestelle können an die Tabletts 14 und/oder Gefäße 12 angepasst sein. Beispielsweise kann es sich um Drahtgestelle handeln.

Wie in Fig. 4 zu sehen ist, werden die Gefäße 12 von der Transportvorrichtung 36, z.B. dem Greifer 40, um 180° gedreht.

Der Greifer 40 befindet sich in einer Wartestellung vor der geschlossenen Öffnung 28 zur Hebevorrichtung 20.

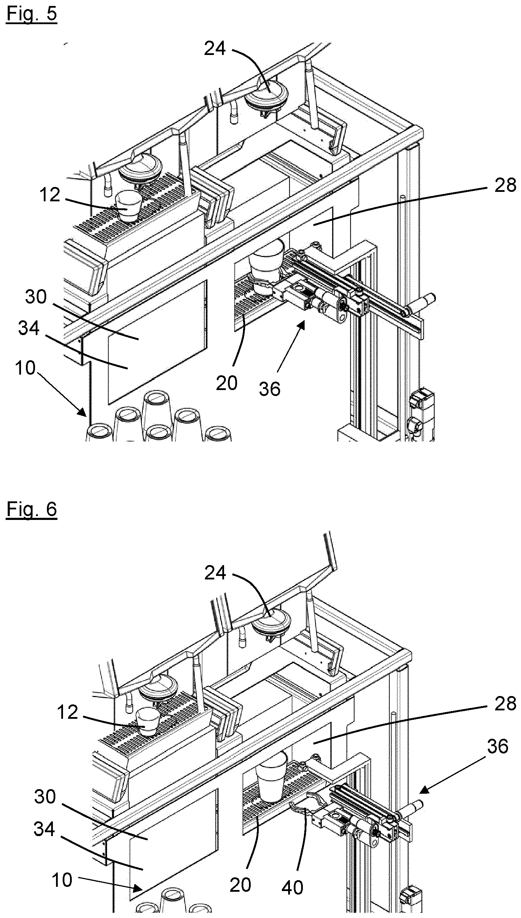

Wie in Fig. 5 dargestellt ist, ist die Hebevorrichtung 20 derart ausgebildet, dass in einer Aufnahmeposition, in der ein Gefäß 12 aus dem Gefäßspeicher 10 aufnehmbar ist, die Öffnung 28 des Gefäßspeichers 10 freigegeben ist. In der gegenüber der Aufnahmeposition erhöhten Befüllposition ist die Öffnung 28 hingegen verschlossen, sodass die Temperatur im Gefäßspeicher 10 nicht stark beeinflusst wird.

Wie in Fig. 6 zu sehen ist, kann das Gefäß 12 auf der Hebevorrichtung 20 abgestellt werden. Der Greifer 40 zieht sich anschließend wieder aus dem Bereich der Hebevorrichtung 20 zurück.

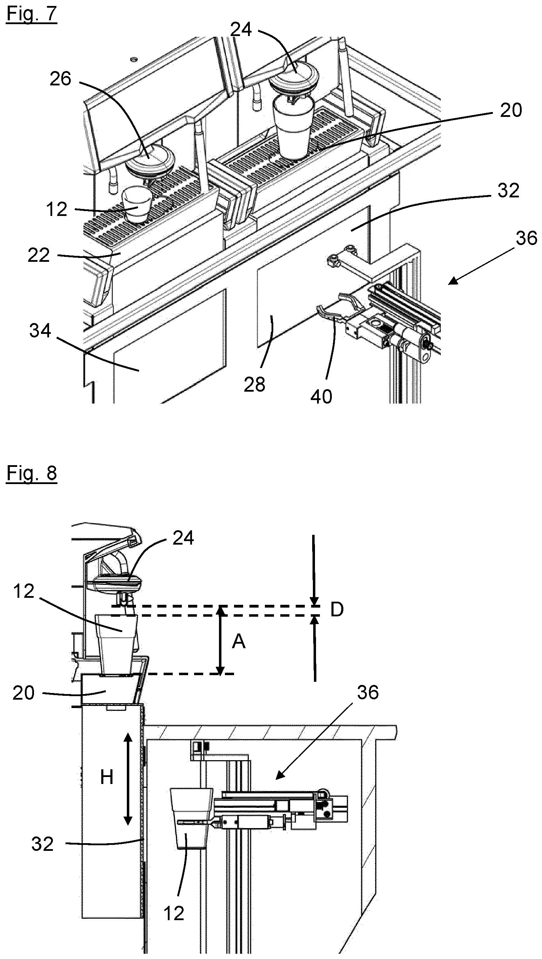

Aus Fig. 7 ist ersichtlich, dass die Hebevorrichtung 20 anschließend nach oben gehoben wird, wobei die Öffnung 28 automatisch verschlossen wird.

Die Hebevorrichtungen 20, 22 können, abhängig von der Größe der Gefäße 12, unterschiedlich weit nach oben in Richtung der Flüssigkeitsauslässe 24, 26 bewegt werden.

Fig. 8 zeigt schematisch, dass die Hebevorrichtung 20 um den Hub H verstellt werden kann. Durch den Hub H wird entsprechend der Größe des Gefäßes 12 der Abstand A von der Hebevorrichtung 20 zum Flüssigkeitsauslass 24 und somit eine optimale Distanz D vom Gefäß 12 zum Flüssigkeitsauslass 24 eingestellt.

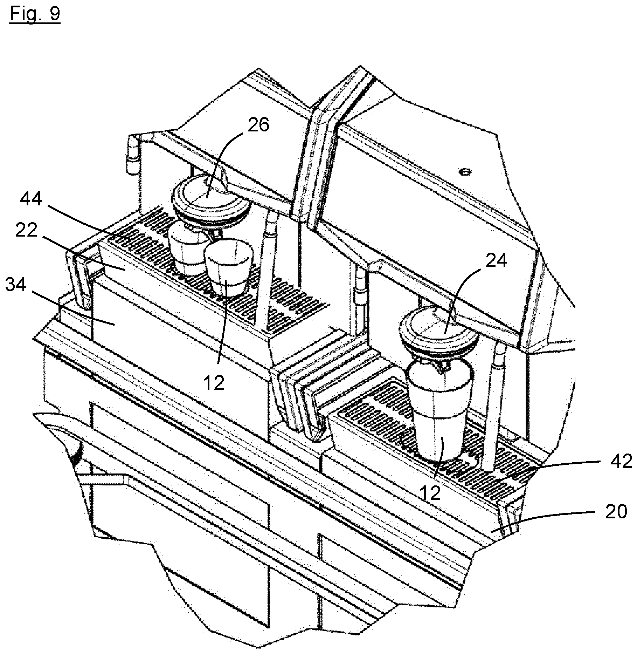

Die unterschiedlichen Abstände A sind auch in Fig. 9 zu sehen.

Die Gefäße 12 können an unterschiedlichen, vorgegebenen Positionen auf den Hebevorrichtungen 20, 22 abgestellt werden. Beispielsweise können mehrere kleine Gefäße 12 nebeneinander abgestellt werden. Ein großes Gefäß 12 kann hingegen z.B. mittig abgestellt werden.

Die Gefäße 12 können beispielsweise durch die Transportvorrichtung 36 an der gewünschten Position abgestellt werden.

Die Anzahl der Positionen kann beliebig hoch sein, da die Transportvorrichtung 36 beispielsweise frei programmierbar sein kann, wodurch eine sehr hohe Flexibilität gegeben ist.

Die Hebevorrichtungen 20, 22 können jeweils eine Abtropfvorrichtung 42, 44 aufweisen, auf der die Gefäße 12 abgestellt werden.

### Bezugszeichenliste

- 10: Gefäßspeicher
- 12: Gefäß
- 14: Tablett
- 16, 18: Zuführvorrichtung
- 20, 22: Hebevorrichtung
- 24, 26: Flüssigkeitsauslass
- 28, 30: Öffnung
- 32, 34: Wandung
- 36: Transportvorrichtung
- 38: Schiene
- 40: Greifer
- 42, 44: Abtropfvorrichtung

- H: Hub
- A: Abstand
- D: Distanz

## Patentansprüche

1. Vorrichtung zur automatisierten Bereitstellung von Flüssigkeiten, vorzugsweise Kaffee, Tee und/oder Kaltgetränken, aufweisend
einen Gefäßspeicher (10) zum Speichern von Gefäßen (12), wobei der Gefäßspeicher (10) eine Temperierungsvorrichtung zum Temperieren der Gefäße (12) aufweist, und
eine Zuführvorrichtung (16, 18) zum Zuführen wenigstens eines Gefäßes (12) zu einem Flüssigkeitsauslass (24, 26) einer Zubereitungsvorrichtung, wobei die Zuführvorrichtung (16, 18) eine Hebevorrichtung (20, 22) aufweist, die derart ausgebildet ist, dass in einer Aufnahmeposition, in der ein Gefäß (12) aus dem Gefäßspeicher (10) aufnehmbar ist, eine Öffnung (28, 30) des Gefäßspeichers (10) freigegeben ist und in einer gegenüber der Aufnahmeposition erhöhten Befüllposition, in der das Gefäß (12) über den Flüssigkeitsauslass (24, 26) befüllbar ist, die Öffnung (28, 30) des Gefäßspeichers (10) geschlossen ist
**dadurch gekennzeichnet,**
**dass** die Hebevorrichtung (20, 22) eine seitliche Wandung (32, 34) als Verschluss für die Öffnung (28, 30) des Gefäßspeichers (10) aufweist.

2. Vorrichtung nach Anspruch 1,
**dadurch gekennzeichnet,**
**dass** die Hebevorrichtung (20, 22) derart ausgebildet ist, dass die Öffnung (28, 30) des Gefäßspeichers (10) beim Heben der Hebevorrichtung (20, 22) aus der Aufnahmeposition in die Befüllposition automatisch geschlossen wird.

3. Vorrichtung nach Anspruch 1 oder 2,
**dadurch gekennzeichnet,**
**dass** ein Abstand (A) der Hebevorrichtung (20, 22) zum Flüssigkeitsauslass (24, 26) in der Befüllposition abhängig von der Größe des Gefäßes (12) einstellbar ist.

4. Vorrichtung nach einem der vorhergehenden Ansprüche,
**dadurch gekennzeichnet,**
**dass** die Hebevorrichtung (20, 22) eine Abtropfvorrichtung (42, 44) aufweist.

5. Vorrichtung nach einem der vorhergehenden Ansprüche,
**dadurch gekennzeichnet,**
**dass** die Hebevorrichtung (20, 22) eine Ablaufvorrichtung aufweist.

6. Vorrichtung nach einem der vorhergehenden Ansprüche,
**dadurch gekennzeichnet,**
**dass** der Gefäßspeicher (10) eine Transportvorrichtung (36) aufweist, die dazu ausgebildet ist, wenigstens ein Gefäß (12) zur in der Aufnahmeposition befindlichen Hebevorrichtung (20, 22) zu transportieren, vorzugsweise an eine vorgebbare Position auf der Hebevorrichtung (20, 22).

7. Vorrichtung nach Anspruch 6,
**dadurch gekennzeichnet,**
**dass** die Transportvorrichtung (36) dazu ausgebildet ist, das Gefäß um 180° zu drehen.

8. Verfahren zur automatisierten Bereitstellung von Flüssigkeiten, vorzugsweise Kaffee, Tee und/oder Kaltgetränken, mit einer Vorrichtung nach einem der vorhergehenden Ansprüche, bei dem
Gefäße (12) im Gefäßspeicher (10) temperiert werden,
die Hebevorrichtung (20, 22) in die Aufnahmeposition verstellt wird, wobei
die Öffnung (28, 30) des Gefäßspeichers (10) freigegeben wird,
das Gefäß (12) auf der Hebevorrichtung (20, 22) aufgenommen wird, und
die Hebevorrichtung (20, 22) in eine gegenüber der Aufnahmeposition erhöhte Befüllposition gehoben wird, wobei die Öffnung (28, 30) des Gefäßspeichers (10) durch die seitliche Wandung (32, 34) der Hebevorrichtung (20, 22) geschlossen wird.

9. Verfahren nach Anspruch 8,
**dadurch gekennzeichnet,**
**dass** der Abstand (A) der Hebevorrichtung (20, 22) zum Flüssigkeitsauslass (24, 26) in der Befüllposition abhängig von der Größe des Gefäßes (12) eingestellt wird.

## Claims

1. Device for the automated supply of liquids, preferably coffee, tea and/or cold drinks, comprising
a container store (10) for storing containers (12), wherein the container store (10) comprises a temperature-control device for controlling the temperature of the containers (12), and
a feeding device (16, 18) for feeding at least one container (12) to a liquid outlet (24, 26) of a preparation device, wherein the feeding device (16, 18) comprises a lifting device (20, 22), which is configured such that, in a receiving position in which a container (12) can be received from the container store (10), an opening (28, 30) of the container store (10) is uncovered and, in a filling position which is elevated relative to the receiving position and in which the container (12) can be filled via the liquid outlet (24, 26), the opening (28, 30) of the container store (10) is closed,
**characterised in that**
the lifting device (20, 22) has a lateral wall (32, 34) serving as a closure for the opening (28, 30) of the container store (10).

2. Device according to claim 1,
**characterised in that**
the lifting device (20, 22) is configured such that the opening (28, 30) of the container store (10) is automatically closed when the lifting device (20, 22) is lifted from the receiving position into the filling position.

3. Device according to claim 1 or 2,
**characterised in that**,
in the filling position, a distance (A) between the lifting device (20, 22) and the liquid outlet (24, 26) can be adjusted to the size of the container (12).

4. Device according to any of the preceding claims,
**characterised in that**
the lifting device (20, 22) comprises a drip device (42, 44).

5. Device according to any of the preceding claims,
**characterised in that**
the lifting device (20, 22) comprises a drain device.

6. Device according to any of the preceding claims,
**characterised in that**
the container store (10) comprises a transport device (36) which is configured for transporting at least one container (12) to the lifting device (20, 22), which is in the receiving position, preferably to a predeterminable position on the lifting device (20, 22).

7. Device according to claim 6,
**characterised in that**
the transport device (36) is configured to rotate the container through 180 degrees.

8. Method for the automated supply of liquids, preferably coffee, tea and/or cold drinks, with a device according to any of the preceding claims, in which
the temperature of the containers (12) is controlled in the container store (10),
the lifting device (20, 22) is moved into the receiving position, wherein the opening (28, 30) of the container store (10) is uncovered,
the container (12) is received on the lifting device (20, 22), and the lifting device (20, 22) is lifted into a filling position which is elevated relative to the receiving position, wherein the opening (28, 30) of the container store (10) is closed by the lateral wall (32, 34) of the lifting device (20, 22).

9. Method according to claim 8,
**characterised in that**,
in the filling position, the distance (A) from the lifting device (20, 22) to the liquid outlet (24, 26) is adjusted to the size of the container (12).

## Revendications

1. Dispositif pour l'approvisionnement automatisé en liquides, de préférence en café, thé et/ou boissons froides, comprenant
un réservoir de récipients (10) pour stocker des récipients (12), le réservoir de récipients (10) présentant un dispositif de mise en température pour mettre en température les récipients (12), et
un dispositif d'alimentation (16, 18) pour amener au moins un récipient (12) à une sortie de liquide (24, 26) d'un dispositif de préparation, le dispositif d'alimentation (16, 18) présentant un dispositif de levage (20, 22) qui est réalisé de telle sorte que, dans une position de réception dans laquelle un récipient (12) peut être reçu depuis le réservoir de récipients (10), une ouverture (28, 30) du réservoir de récipients (10) est libérée, et dans une position de remplissage surélevée par rapport à la position de réception, dans laquelle le récipient (12) peut être rempli via la sortie de liquide (24, 26), l'ouverture (28, 30) du réservoir de récipients (10) est fermée,
**caractérisé en ce que**
le dispositif de levage (20, 22) présente une paroi latérale (32, 34) servant d'obturateur pour l'ouverture (28, 30) du réservoir de récipients (10).

2. Dispositif selon la revendication 1,
**caractérisé en ce que**
le dispositif de levage (20, 22) est réalisé de telle sorte que l'ouverture (28, 30) du réservoir de récipients (10) est automatiquement fermée lors du soulèvement du dispositif de levage (20, 22) depuis la position de réception jusque dans la position de remplissage.

3. Dispositif selon la revendication 1 ou 2,
**caractérisé en ce que**
une distance (A) du dispositif de levage (20, 22) par rapport à la sortie de liquide (24, 26) dans la position de remplissage est réglable en fonction de la taille du récipient (12).

4. Dispositif selon l'une des revendications précédentes,
**caractérisé en ce que**
le dispositif de levage (20, 22) comporte un dispositif d'égouttage (42, 44).

5. Dispositif selon l'une des revendications précédentes,
**caractérisé en ce que**
le dispositif de levage (20, 22) comporte un dispositif d'écoulement.

6. Dispositif selon l'une des revendications précédentes,
**caractérisé en ce que**
le réservoir de récipients (10) comporte un dispositif de transport (36) réalisé pour transporter au moins un récipient (12) vers le dispositif de levage (20, 22) situé en position de réception, de préférence vers une position prédéfinissable sur le dispositif de levage (20, 22).

7. Dispositif selon la revendication 6,
**caractérisé en ce que**
le dispositif de transport (36) est réalisé pour faire tourner le récipient de 180°.

8. Procédé d'approvisionnement automatisé en liquides, de préférence en café, thé et/ou boissons froides, avec un dispositif selon l'une des revendications précédentes, dans lequel
des récipients (12) dans le réservoir de récipients (10) sont mis en température,
le dispositif de levage (20, 22) est déplacé jusque dans la position de réception, l'ouverture (28, 30) du réservoir de récipients (10) étant libérée,
le récipient (12) est reçu sur le dispositif de levage (20, 22), et
le dispositif de levage (20, 22) est soulevé jusque dans une position de remplissage surélevée par rapport à la position de réception, l'ouverture (28, 30) du réservoir de récipients (10) étant fermée par la paroi latérale (32, 34) du dispositif de levage (20, 22).

9. Procédé selon la revendication 8,
**caractérisé en ce que**
la distance (A) du dispositif de levage (20, 22) par rapport à la sortie de liquide (24, 26) dans la position de remplissage est réglée en fonction de la taille du récipient (12).
